# EUROPÄISCHE PATENTSCHRIFT

(11) **EP 2 012 026 B1**
(45) Veröffentlichungstag und Bekanntmachung des Hinweises auf die Patenterteilung: **12.10.2011**
(21) Anmeldenummer: 08008479.1
(22) Anmeldetag: 06.05.2008
(51) Int. Cl.: F16B 25/10, F16B 33/02, F16B 35/04

(54) **Schraube**
Screw
Vis

(30) Priorität: 18.05.2007 DE 102007024240
(43) Veröffentlichungstag der Anmeldung: 07.01.2009
(73) Patentinhaber: SWG Schraubenwerk Gaisbach GmbH, 74638 Waldenburg (DE); Würth International AG, 7000 Chur (CH)
(72) Erfinder: Stiebitz, Günter, 74638 Waldenburg (DE); Wolfarth, Uwe, 74575 Schrozberg (DE)
(74) Vertreter: Patentanwälte Ruff, Wilhelm, Beier, Dauster & Partner

(56) Entgegenhaltungen:
- EP-A- 0 939 235
- EP-A- 1 925 828
- DE-C- 52 742
- US-A- 2 263 137
- US-A1- 2005 069 396

## Beschreibung

Die Erfindung geht aus von einer Schraube, insbesondere einer selbstbohrenden Schraube.

Es ist bekannt, dass man zum Erleichtern des Einschraubens von Schrauben in Holz oder holzähnliches Material an den Bohrspitzen der Schrauben Fräsrippen anbringt, die in der Regel in Längsrichtung verlaufen, also quer zur Bewegung der Schraubenspitze gegenüber dem Holz. Diese Fräsrippen sind auch dazu gedacht, die Gefahr von Spaltrissen oder Aussplittern zu verringern.

Bei einer bekannten Schraube dieser Art (DE 19525732) liegen die Fräsrippen bei einer kegelförmigen Schraubenspitze in einer Erzeugenden der Kegelform, anders ausgedrückt verlaufen sie in einer die Längsachse der Schraube enthaltenden Längsmittelebene.

Ebenfalls bekannt ist eine Schraube (EP 0939235 A1), bei der mehrere Fräsrippen schräg verlaufen, und zwar unter einem Neigungswinkel gegenüber der Längsachse in einem Bereich von etwa 15°.

Weiterhin bekannt ist eine Schraube, die innerhalb der Schraubenspitze ein doppelgängiges Gewinde aufweist (DE 52742).

Ein weiteres Befestigungselement in Form einer Schraube hat innerhalb des Schraubenschafts angenähert in Axialrichtung verlaufende Rippen, die unterschiedliche Abweichungen von der Längsachse aufweisen können (US 2263127).

Bei einem nochmals weiteren gewindeformenden Verbindungselement ist innerhalb des vorderen Teils der Schraubenspitze mindestens eine scharfkantige in Axialrichtung verlaufende Rippe vorgesehen (EP 761992).

Der Erfindung liegt die Aufgabe zu Grunde, eine Schraube, insbesondere eine selbstbohrende Schraube, mit verbesserten Einschraubeigenschaften insbesondere im Hinblick auf das Spalten von Holz während des Einschraubens zu schaffen.

Zur Lösung dieser Aufgabe schlägt die Erfindung eine Schraube mit den im Anspruch 1 genannten Merkmalen vor. Weiterbildungen der Erfindung sind Gegenstand von Unteransprüchen.

Das gegenläufige Gewinde, das sich nur über die Schraubenspitze erstreckt, bildet eine besonders günstige Möglichkeit, beim Herstellen des Lochs, in das die Schraube dann eingeschraubt wird, eine Spaltwirkung zu verhindern, so dass die Schraube auch im Randbereich von Hölzern eingesetzt werden kann, ohne dass die Gefahr besteht, dass dort die Faser des Holzes aufreißt und sich die Schraube damit dann nicht mehr sorgfältig festschrauben lässt. Da die Spaltwirkung der Schraube durch die sich erweiternde Schraubenspitze entsteht, braucht das Schabegewinde auch nur in diesem Bereich angeordnet zu sein.

Als besonders sinnvoll hat es sich herausgestellt, das Schabegewinde so auszugestalten, dass es sich über mindestens eine, insbesondere zwei oder auch drei Windungen erstreckt, so dass auf diese Weise auch bei dem Schabegewinde eine allenfalls durch das Schraubgewinde unterbrochene kontinuierliche Schabekante über mindestens eine Umdrehung entsteht.

Die Gewindehöhe des Schabegewindes kann in Weiterbildung der Erfindung so gewählt werden, dass sie zwischen 0,2 mm und maximal der Gewindehöhe des Schraubgewindes liegt. Da die Gewindehöhe von der Schraubengröße abhängt, berücksichtigt das Schabegewinde daher auch die Schraubengröße.

Besonders sinnvoll ist es, wenn das Schabegewinde nicht direkt an dem vorderen spitzen Ende der Schraubenspitze beginnt. Es ist also dafür gesorgt, dass zunächst das bis zu dem vorderen Ende reichende Schraubgewinde in das Holz eingreift, um den Vorschub zu erzeugen. Erfindungsgemäß kann vorgesehen sein, dass die Gewindehöhe des Schabegewindes von seinem der Schraubenspitze zugeordneten vorderen Bereich bis zu seinem Ende konstant bleibt. Dies gilt insbesondere dann, wenn die Gewindehöhe des Schabegewindes kleiner ist als die Gewindehöhe des Schraubgewindes.

Es ist aber ebenfalls möglich und liegt im Rahmen der Erfindung, dass die Gewindehöhe des Schabegewindes von seinem der Schraubenspitze zugeordneten Anfang bis zu dem gegenüberliegenden Ende abnimmt, beispielsweise kontinuierlich abnimmt.

Je nach Anwendungsfall kann es auch sinnvoll sein, wenn die Gewindehöhe des Schabegewindes von der Spitze zum Schaft zunimmt.

Erfindungsgemäß kann in Weiterbildung vorgesehen sein, dass die Steigung des Schabegewindes kleiner oder gleich ist als die Gewindesteigung des Schraubgewindes.

Als besonders sinnvoll hat es sich herausgestellt, die Gewindesteigung des Schabegewindes der Gewindesteigung des Schraubgewindes gleich zu machen. Diese symmetrische Geometrie der beiden Gewinde hat sich als die beste Ausführung herausgestellt. Was das Einschrauben der Schraube in Holz angeht, ergibt sich ein optimales Schaben im Verhältnis zum Antrieb. Was die Herstellung der Schraube durch Umformen angeht, so ist hierdurch die optimale Ausformung des Schabegewindes durch Kaltwalzen gegeben.

Bei dem Schraubgewinde kann es sich um ein Spanplattengewinde oder auch um ein Holzgewinde handeln. Es kann eingängig oder auch mehrgängig sein. Dementsprechend kann auch das Schabegewinde eingängig oder mehrgängig sein.

Bei der Spitze der Schraube kann es sich um eine Bohrspitze handeln, bei der die Spitze der Schraube als eine Kegelform mit bis zur Spitze geführtem Schraubgewinde ausgebildet ist.

Die von der Erfindung vorgeschlagene Schraube ist nicht nur für Holz oder holzähnliches Material geeignet, sondern auch für die Anwendung als Blechschraube.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: eine Seitenansicht einer Ausführungsform einer Schrau- be nach der Erfindung;
- Figur 2: die Seitenansicht des vorderen Endes der Schraube in vergrößertem Maßstab.

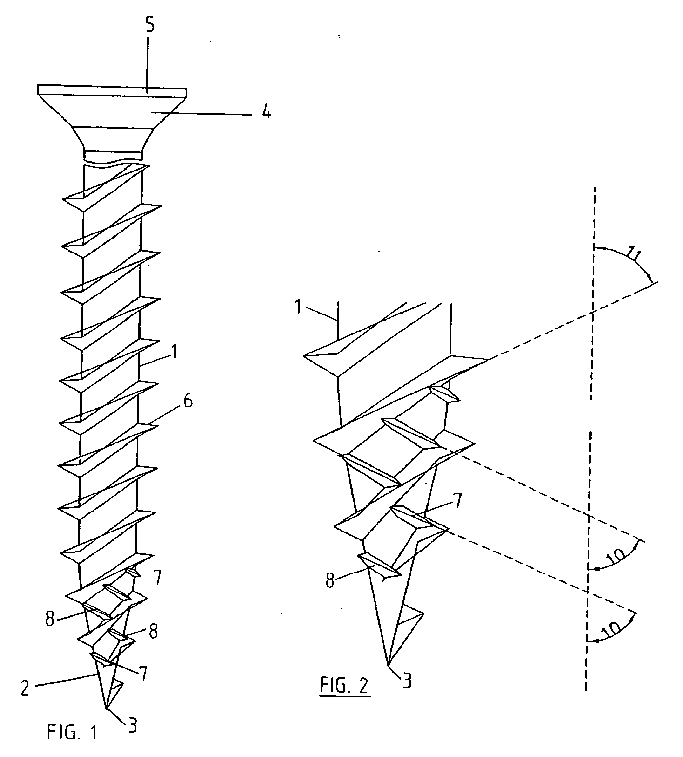

Die in Figur 1 und 2 dargestellte Schraube enthält einen zylindrischen Schraubenschaft 1, der an seinem einen in Figur 1 unteren Ende in eine Schraubenspitze 2 übergeht. Die Schraubenspitze 2 weist in der Ausführungsform der Figur 1 Kegelform mit einer scharfen Spitze 3 auf. Der Kegelwinkel beträgt etwa 30°. An dem gegenüberliegenden Ende ist ein Schraubenkopf 4 ausgebildet, im dargestellten Beispiel ein Senkkopf. Von dem freien beispielsweise ebenen Ende 5 des Senkkopfs 4 führt in diesen eine Schraubenantriebsvertiefung hinein, die dazu dient, die Schraube mit einem entsprechenden Werkzeug zu verdrehen.

An dem Schraubenschaft 1 ist ein Schraubengewinde 6 ausgebildet, das beispielsweise durch Walzen hergestellt ist. Im dargestellten Beispiel handelt es sich um ein zweigängiges Gewinde. Dieses Gewinde 6 reicht bei der Ausführungsform der Figur 1 bis zu der scharfen Spitze 3 der Schraubenspitze 2.

In dem vorderen Bereich ist gleichzeitig ein gegenläufiges Gewinde 7 vorhanden, das etwa auf halber Länge der Kegelform der Schraubenspitze 2 beginnt und sich über etwa zwei Windungen erstreckt. Dieses ebenfalls zweigängige Gewinde 7 bildet eine Gewindekante 8, die als Schabekante ausgebildet ist und wirkt. Man kann der Figur 1 entnehmen, dass dieses gegenläufige Schabegewinde 7 die gleiche Gewindesteigung aufweist wie das Schraubgewinde 6. Seine Gewindehöhe, also der Abstand seiner Schabekante 8 von der Oberfläche des Schraubenschafts 1, ist etwa halb so groß wie die Gewindehöhe des Schraubgewindes 6.

Die Art und Anordnung der Gewindegänge des Schabegewindes 7 sind in Figur 2 in vergrößertem Maßstab dargestellt. Der Winkel 10 zwischen der Schabekante 8 des Schabegewindes 7 und der Längsachse der Schraube beträgt bei dem in der Zeichnung dargestellten Beispiel ungefähr 60 bis 65°, ebenso wie der Winkel 11 zwischen dem Gewinde 6 und der Längsachse der Schraube. Da die beiden Gewinde unterschiedliche Orientierung aufweisen, sind die Winkel auch an unterschiedlichen Stellen eingezeichnet. Man kann der Figur 2 ebenfalls entnehmen, dass sowohl das Schabegewinde 7 als auch das Schraubgewinde 6 als zweigängiges Gewinde ausgebildet sind.

Die Größe dieses Winkels zwischen den Schraubenlinien und der Längsachse der Schraube hängt natürlich von der Zahl der Windungen der Gewinde pro Längeneinheit der Schraube ab. Er kann natürlich auch andere Winkel einnehmen, in Abhängigkeit von den Durchmessern und den gewünschten Steigungen.

Der maximale Radius des Schabegewindes 7, also der maximale Abstand der Schabekante 8 von der Längsachse der Schraube, ist etwas größer als der Radius des Kerns des Schraubenschafts 1. Dieser maximale Radius ist nur an der von der Spitze 3 aus gesehen letzten Windung des Schabegewindes 7 in dessen letztem Bereich gegeben.

## Patentansprüche

1. Schraube, insbesondere selbstbohrende Schraube, mit
1.1 einem Schraubenkopf (4),
1.2 einem Schraubenschaft (1),
1.3 einer Schraubenspitze (2),
1.4 einem Schraubgewinde (6), **dadurch gekennzeichnet, dass** die Schraube mit
1.5 einem gegenläufig zu dem Schraubgewinde (6) verlaufenden eine Schabekante aufweisenden Schabegewinde (7) ausgestaltet ist, das
1.6 mit einem Abstand von dem vorderen Ende (3) der Schraube beginnt und
1.7 sich nur über die Schraubenspitze (6) und
1.8 über zwei bis drei Windungen zur Bildung einer allenfalls durch das Schraubgewinde (6) unterbrochenen kontinuierlichen Schabekante über mindestens eine Umdrehung erstreckt.

2. Schraube nach Anspruch 1, bei der die Gewindehöhe des Schabegewindes (7) in einem Bereich zwischen 0,2 mm und der Gewindehöhe des Schraubgewindes (6) liegt.

3. Schraube nach Anspruch 1 oder 2, bei der die Gewindehöhe des Schabegewindes (7) von dem vorderen Ende (3) der Schraube in Richtung auf den Schraubenkopf (4) konstant bleibt.

4. Schraube nach Anspruch 1 oder 2, bei der die Gewindehöhe des Schabegewindes von dem vorderen Ende (3) der Schraube ausgehend in Richtung auf den Schraubenkopf (4) abnimmt.

5. Schraube nach einem der vorhergehenden Ansprüche, bei der die Gewindesteigung des Schabegewindes (7) kleiner oder gleich der Gewindesteigung des Schraubgewindes (6) ist.

6. Schraube nach einem der vorhergehenden Ansprüche, bei der die Gewindesteigung des Schabegewindes (7) gleich der Gewindesteigung des Schraubgewindes (6) ist.

7. Schraube nach einem der vorhergehenden Ansprüche, bei der das Schraubgewinde (6) ein eingängiges Gewinde ist.

8. Schraube nach einem der Ansprüche 1 bis 6, bei der das Schraubgewinde ein mehrgängiges Gewinde ist.

9. Schraube nach einem der vorhergehenden Ansprüche, bei der das Schraubgewinde (6) ein Spanplattengewinde ist.

10. Schraube nach einem der Ansprüche 1 bis 8, bei der das Schraubgewinde (6) ein Holzgewinde ist.

11. Schraube nach einem der vorhergehenden Ansprüche, bei der die Schraubenspitze (2) als Bohrspitze ausgebildet ist.

## Claims

1. Screw, in particular a self-drilling screw, comprising
1.1 a screw head (4),
1.2 a screw shank (1),
1.3 a screw tip (2),
1.4 a screw thread (6), **characterized in that** the screw is configured with
1.5 a scraping thread (7) which runs in the opposite direction to the screw thread (6) and has a scraping edge and which
1.6 starts at a distance from the front end (3) of the screw and extends
1.7 only over the screw tip (6) and
1.8 over two to three thread turns for forming a continuous scraping edge, interrupted at most by the screw thread (6), over at least one turn of the screw.

2. Screw according to Claim 1, wherein the thread depth of the scraping thread (7) is within a range of between 0.2 mm and the thread depth of the screw thread (6) .

3. Screw according to Claim 1 or 2, wherein the thread depth of the scraping thread (7) remains constant from the front end (3) of the screw in the direction of the screw head (4).

4. Screw according to Claim 1 or 2, wherein the thread depth of the scraping thread decreases from the front end (3) of the screw in the direction of the screw head (4).

5. Screw according to one of the preceding claims, wherein the thread pitch of the scraping thread (7) is less than or equal to the thread pitch of the screw thread (6).

6. Screw according to one of the preceding claims, wherein the thread pitch of the scraping thread (7) is equal to the thread pitch of the screw thread (6).

7. Screw according to one of the preceding claims, wherein the screw thread (6) is a single-start thread.

8. Screw according to one of Claims 1 to 6, wherein the screw thread is a multi-start thread.

9. Screw according to one of the preceding claims, wherein the screw thread (6) is a chipboard screw thread.

10. Screw according to one of Claims 1 to 8, wherein the screw thread (6) is a woodscrew thread.

11. Screw according to one of the preceding claims, wherein the screw tip (2) is designed as a drilling tip.

## Revendications

1. Vis, en particulier vis auto-taraudeuse, comprenant :
1.1 une tête de vis (4),
1.2 une tige de vis (1),
1.3 une pointe de vis (2),
1.4 un filetage de vis (6), **caractérisée en ce que** la vis est munie
1.5 d'un filetage de raclage (7) s'étendant en sens inverse du filetage de vis (6) et présentant une arête de raclage, qui
1.6 commence à une distance de l'extrémité avant (3) de la vis et
1.7 s'étend seulement sur la pointe de vis (6) et
1.8 sur deux à trois enroulements de filet pour former une arête de raclage continue tout au plus interrompue par le filetage de vis (6) sur au moins un tour de la vis.

2. Vis selon la revendication 1, dans laquelle la hauteur de filet du filetage de raclage (7) est comprise entre 0,2 mm et la hauteur du filetage de vis (6).

3. Vis selon la revendication 1 ou 2, dans laquelle la hauteur de filet du filetage de raclage (7) reste constante depuis l'extrémité avant (3) de la vis dans la direction de la tête de vis (4).

4. Vis selon la revendication 1 ou 2, dans laquelle la hauteur de filet du filetage de raclage diminue depuis l'extrémité avant (3) de la vis dans la direction de la tête de vis (4).

5. Vis selon l'une quelconque des revendications précédentes, dans laquelle le pas de filet du filetage de raclage (7) est inférieur ou égal au pas de filet du filetage de vis (6).

6. Vis selon l'une quelconque des revendications précédentes, dans laquelle le pas de filet du filetage de raclage (7) est égal au pas de filet du filetage de vis (6).

7. Vis selon l'une quelconque des revendications précédentes, dans laquelle le filetage de vis (6) est un filetage à pas unique.

8. Vis selon l'une quelconque des revendications 1 à 6, dans laquelle le filetage de vis est un filetage à pas multiples.

9. Vis selon l'une quelconque des revendications précédentes, dans laquelle le filetage de vis (6) est un filetage de vis pour panneau aggloméré.

10. Vis selon l'une quelconque des revendications 1 à 8, dans laquelle le filetage de vis (6) est un filetage pour vis à bois.

11. Vis selon l'une quelconque des revendications précédentes, dans laquelle la pointe de vis (2) est réalisée sous forme de pointe de foret.
